# EUROPÄISCHE PATENTANMELDUNG

(11) **EP 4 033 859 A1**
(43) Veröffentlichungstag der Anmeldung: **27.07.2022**
(21) Anmeldenummer: 22157050.0
(22) Anmeldetag: 04.04.2019
(51) Int. Cl.: H05B 6/10

(54) **ROTATIONS-INDUKTIONS-WÄRMEERZEUGER MIT GLEICHSTROMERREGUNG, EXTREM KLEINEM ELEKTRISCHEN/KINETISCHEN WIRKUNGSGRAD UND EXTREM HOHEM THERMISCHEN COP**

(30) Priorität: 06.04.2018 DE 102018108179
(62) Teilanmeldung aus: 19716381.9
(71) Anmelder: Seiwald, Andreas, 6306 Söll (AT)
(72) Erfinder: Seiwald, Andreas, 6306 SÖLL (AT)
(74) Vertreter: Eisenführ Speiser

(57) **Zusammenfassung**

Die Erfindung betrifft einen Rotations-Induktions-Wärmeerzeuger mit Gleichstromerregung zum Erwärmen von festen oder flüssigen oder gasförmigen Stoffen, dadurch gekennzeichnet, dass das zur Induktion bzw. zum Erzeugen von induktiver Wärme erforderliche magnetische Wechselfeld mit einer Gleichstromspule, ein magnetisches Gleichfeld erzeugt wird und in dieses magnetische Gleichfeld über ein rotierendes, mechanisches Bauteil in ein magnetisches Wechselfeld umgewandelt wird, wobei eine Gleichstromspule von einem Magnetring (20) aufgenommen und hiermit vorzugsweise fest verbunden ist, wobei der Magnetring (20) feststehend mit dem Gehäuse (17) des Rotations-Induktions-Wärmeerzeugers (1) verbunden ist, und wobei das von der Gleichstromspule (29) erzeugte magnetische Gleichfeld (51) über ein rotierendes mechanisches Teil, nämlich ein Polrad (19) in ein magnetisches Wechselfeld (52) umgewandelt wird, wobei das Polrad (19) aus einem inneren Polring (53), einem äußeren Polring (54) und einem Polringträger (21, 24) besteht, durch den das magnetische Gleichfeld (51) in ein Wechselfeld (52) in ein axial zum Polrad (32) benachbarten Induktionsring (18) umgewandelt wird, wobei der innere und der äußere Polring mehrere radial ausgerichtete Polfortsätze (46, 47) aufweisen, bevorzugt mehr als zehn, die entweder
a) ineinandergreifen, d.h. teilweise radial nebeneinander angeordnet sind bzw. sich überlappen (Fig. 5a) oder
b) sich nicht überlappen, sondern die Polfortsätze (46) des inneren Polrings (53) radial beabstandet sind von den Polfortsätzen (47) des äußeren Polrings (54), wobei die Polfortsätze des inneren und äußeren Polrings einen vorbestimmten Abstand (A) zueinander aufweisen und vorzugsweise die Zahl der Polfortsätze des inneren Polrings (53) in etwa der Zahl der Polfortsätze des äußeren Polrings (54) entspricht, oder gleich ist.

## Beschreibung

Die Erfindung betrifft einen Rotations-Induktions-Wärmeerzeuger, bei dem die thermische Energie mittels magnetischer Induktion in Form von Wirbelströmen über eine Gleichstromerregung und eine mechanische Vorrichtung zum Generieren des magnetischen Wechselfeldes erzeugt wird. Der Wärmeerzeuger ist einsetzbar zur Warmwassererzeugung von Heizungen jeder Art sowie zur Brauchwassererwärmung und über eine gesonderte Vorrichtung zur effizienten Umwandlung von thermischer in kinetische Energie, sowie von Wärme- in Kälteenergie.

Wirbelströme sind Kurzschlussströme, welche die elektrische Energie in einem elektrischen Leiter in thermische Energie umwandeln. Abgesehen von geringem Konvektionsverlusten, wird diese Energie zu 100% in ein fest, flüssiges (bevorzugt ist Öl) oder gasförmiges Wärmeträgermedium übergeleitet.

Es gibt bereits bekannte Wärmeerzeuger, bei denen mit Wirbelströmen thermische Energie erzeugt wird. Einige davon sind z.B. Induktionsöfen oder Induktionskochfelder.

Thermische Energie wird hier ausschließlich im zu erwärmenden Medium erzeugt. Das Medium bildet die magnetische bzw. elektrisch leitende Brücke zum Heizgerät, wo infolge Wirbelströme das Medium erhitzen. Im Heizgerät selbst werden nur geringförmige Hysterese- und Wirbelstromverluste verzeichnet.

Damit genannte Systeme funktionieren können, müssen die Erregerspulen mit Wechselstrom (bzw. Wechselspannung) beaufschlagt werden.

Dieser Wechselstrom erzeugt ein magnetisches Wechselfeld in den Spulen, wobei induktive Ströme generiert werden und die nach dem bekannten Induktionsgesetz dem angelegten Strom entgegenwirken.

Dazu sind bestimmte technische Maßnahmen notwendig, wie Magnetkerne aus dünnen, beschichteten und isolierten Blechen mit schlechter elektrischer Leitfähigkeit oder Ferritkerne mit hohem elektrischem Widerstand gegen Wirbelströme, sowie Spulen mit niedriger Windungszahl und kleinem Ohmschen Widerstand gegen induktiven Blindwiderstand. Auf die exakte Wirkungsweise von Wechselstromspulen wird hier nicht näher eingegangen.

Neben den bereits bekannten Heizsystemen sind Wirbelstrombremsen zu nennen, welche ebenso thermische Energie generieren. Auch hier zeigt sich das gleiche Problem. Wirbelstrombremsen werden zwar mit Gleichstrom betrieben und haben einen hohen elektrischen Effizienzgrad, benötigen aber eine äquivalente kinetische Energie zum Erzeugen der thermischen Energie bzw. um das System in Bewegung zu halten.

Das bedeutet, dass bei allen genannten Systemen die einzubringende elektrische und/oder kinetische Energie höher ist als die nutzbare Wärmeenergie. Diese Heizsysteme lassen keine Energieersparnis zu und sind zur Wärmeerzeugung im Heizungs- und Brauchwasserbereich manchmal weniger, manchmal auch gar nicht geeignet.

Als Stand der Technik wird hingewiesen auf WO 2011/125485 A1, US 2014/110938 A1, US 3 014 116 A, DE 2620236 A1, DE 2647741 A1, FR 2864369 A1, WO 2008028673 A1, EP 0 071 046, US 2014/0231414, DE 31 29 817, US-A-4,423,344 sowie EP-A2-0 062 706.

Die internationale Recherchenbehörde hat zudem die Dokumente WO 02/087285 A1, US 2006/0086729 A1 und WO 96/29845 A1 recherchiert. Das Dokument WO 02/087285 A1 betrifft eine Vorrichtung zur Umwandlung magnetischer Energie in thermische Energie. Das Dokument US 2006/0086729 A1 betrifft eine Vorrichtung zur Erzeugung von Wärme mittels magnetischer Induktion. Das Dokument WO 96/29845 A1 betrifft eine Heizeinrichtung zum Erwärmen eines Mediums.

Die bekannten Systeme haben sich bislang aufgrund ihres zu geringen thermischen Effizienzwertes (COP) nicht durchgesetzt und auch aufgrund des nachteiligen strukturellen Aufbaus sind die Systeme regelmäßig nur für relativ kleine Leistung ausgelegt, insbesondere für die Anwendung in Fahrzeugen, z.B. als Fahrzeugheizung.

Der COP-Faktor, auch Leistungszahl genannt (abgekürzt LZ) (wird in der englischen Sprache auch Energy Efficiency Ratio (EEER)) bezeichnet), gibt das Verhältnis von erzeugter Wärmeleistung zur eingesetzten elektrischen Leistung an. Eine Leistungszahl von z.B. 4 bedeutet, dass von der eingesetzten elektrischen Leistung das 4-fache an Wärmeleistung bereitgestellt wird, anders formuliert, bei einer Wärmepumpe mit einem COP-Faktor von 4 aus 1KW elektrischer Leistung 4KW Wärmeleistung zur Verfügung gestellt werden.

EP 0071046 A1 beschreibt einen flüssigkeitsgekühlten Wechselstromgenerator, bei welchem eine zusätzliche Komponente zur weiteren Erwärmung des Kühlwassers angekoppelt ist und diese zum Heizen der Fahrkabine angewendet wird. Diese Wärmeerzeugungskomponente stellt dabei einen Klauenpolläufer mit integrierter Erregerspule dar, wobei der Erregerstrom über Schleifringe mit rotierender Spule zugeführt werden muss. Zudem ist der Aufbau des Stators mittels beschichteter Bleche zur Magnetfeldübertragung ausgebildet und an den jeweiligen Statorenden ein massives Material mit guter, elektrischer Leitfähigkeit angebracht. Dieser Stand der Technik offenbart ferner, dass ein kontinuierliches Bremsmoment erzeugt wird und sich diese äquivalent zur erzeugten Wärmeenergie verhält. Schließlich offenbart dieser Stand der Technik, dass die Spule, welche ein Gleichfeld erzeugt, sich ständig in Rotation befindet und der Erregerstrom für die Spule über verschleißanfällige Schleifringe zugeführt wird.

US 2014/0231414 offenbart eine Wirbelstrombremse, bei der die Erzeugung des Magnetfeldes mittels Permanentmagneten erfolgt und Induktionsscheiben aus einem guten elektrischen Leiter bestehen. Dieser Stand der Technik unterscheidet sich von üblichen Wirbelstrombremsen insofern, dass die Leistungsregelung nicht durch Verdrehen der Polpakete erfolgt, sondern die Polpakete mit einer Schwenkvorrichtung zu den Induktionsscheiben ein- bzw. ausgeschwenkt werden.

Bei allen genannten Systemen ist die eingebrachte Energie generell höher als die daraus gewonnene Nutzenergie. Unter Nutzenergie ist zu verstehen, wenn z.B. ein Ohmscher Widerstand die elektrischen Energien (Strom x Spannung = E in Ws) zu 100% in thermische Energie umwandelt. Daraus ist erkennbar, dass diese Heizsysteme keine Energieersparnis zulassen und deshalb sind solche Systeme zur Wärmeerzeugung im Heizungs- und Brauchwasserbereich bislang wenig oder gar nicht geeignet.

Aufgabe der Erfindung ist es, Nachteile der genannten Wärmerzeuger zu vermeiden und ein wesentlich verbessertes Wärmeerzeugungssystem zur Verfügung zu stellen.

Schließlich soll der erfindungsgemäße Rotations-Induktions-Wärmeerzeuger auch ermöglichen, eine Leistung von mehr als 10 kW, vorzugsweise mehr als 20 oder 50 kW oder gar mehr als 100 - 500 kW zur Verfügung zu stellen.

Die Aufgabe wird erfindungsgemäß gelöst durch ein Rotations-Induktions-Wärmeerzeuger mit den Merkmalen nach Anspruch 1, vorteilhafte Weiterbildungen sind in den Unteransprüchen, wie der vorliegenden Beschreibung und in den Zeichnungen beschrieben.

Die Erfindung beruht auf der Erkenntnis, dass das zur Induktion erforderliche magnetische Wechselfeld über eine Erregerspule nicht mittels Wechselstrom, sondern mittels Gleichstrom erzeugt wird, wobei die Erregerspule bevorzugt nicht rotiert, sondern statisch feststeht. Somit können Schleifringe entfallen. Schließlich schlägt die Erfindung eine alternative Struktur für die Ausgestaltung des Magnetrings und eines Polrades vor, mittels dem möglich ist, einen gewünschten sehr hohen COP-Faktor zu erreichen, wie er bislang von dem Rotations-Induktions-Wärmeerzeuger im Stand der Technik nicht bekannt ist. Schließlich zielt die Erfindung auch darauf ab, dass der Rotations-Induktions-Wärmeerzeuger einen bewusst sehr niedrigen, elektrischen (Erregerspule) /kinetischen (Antriebsmotor) Wirkungsgrad aufweist, womit ein Wert von unter 10% gemeint ist, vorzugsweise sogar unter 2%. Gleichzeitig weist aber der erfindungsgemäße Rotations-Induktions-Wärmeerzeuger einen sehr hohen COP-Faktor auf. Als COP-Faktor wird üblicherweise ein "Coefficient of Performance" bezeichnet und dieser COP-Faktor liegt gemäß der Erfindung bei einem Wert von mehr als 2, vorzugsweise mehr als 5, z.B. bei irgendeinem bevorzugten Wert aus dem Bereich 6 bis 50.

Hierbei darf nicht der Fehler gemacht werden, den Wirkungsgrad mit dem COP gleichzusetzten. COP besagt, um welchen Faktor die Eingangsenergie besser genutzt wird. In den aus dem Stand der Technik bekannten Anwendungsformen ist der COP-Faktor regelmäßig sehr klein, das heißt er liegt unter 2, regelmäßig bei 1 oder weniger, weil die zugeführte Energie nur geringfügig höher ist als die abgeführte Energie, um einen gewollt hohen Wirkungsgrad zu erzielen. Das heißt, der schon hohe Wirkungsgrad lässt keine weiter effektive Nutzsteigerung zu.

30 Anders sieht es aus, wenn, wie im vorliegenden Fall bei der Erfindung, der Wirkungsgrad extrem niedrig ist und die Wirbelströme nicht als Nutz- sondern als Abfallenergie betrachtet werden. Hier ist die abgeführte Energie (Energie ab) die kinetische Komponente, weil der magnetische Ablauf entweder Antriebs- oder Bremsenergie nutzbar macht. Als zugeführte Energie (Energie zu) ist die Erregerleistung der Gleichstromspule und die kinetische Energie vom Antriebsmotor zu sehen. Beide zusammen geben ein Maß für die Energie, die der tatsächlichen Nutzenergie, in Umwandlung entweder ein positives und/oder negatives Drehmoment gegenübersteht.

Wirbelstrombremsen sind so aufgebaut, dass die Wirbelströme "drehachsig" wirken. Bei der Erfindung gelingt es nun, die Wirbelstromwirkung so zu entkoppeln, dass diese nicht mehr überwiegend (>90%) drehachsig (Z-Achse) wirken und das Polrad stark abbremsen, sondern auch, unter Umständen überwiegend sogar an die wirkungslosen Achsen X und Y gerichtet sind.

Gleichstromspulen weisen einen vielfach niedrigeren induktiven Blindwiderstand als Wechselstromspulen auf. Das erlaubt den niedrigen Erregerstrom und viele Windungen. Daraus resultiert, dass das magnetische Potenzial (Vektorpotenzial) äquivalent zu Strom x Windungen ist. Hoher Erregerstrom und wenige Windungen (N), z.B. 100 A x 1 N = 100 AW (magnetische Durchflutung) oder niedriger Erregerstrom und viele Windungen z.B. 1 A x 100 N = 100 AW sind dieselbe Größe. Weil das magnetische Gleichfeld keine Induktion generiert, ist die Erfindung auch in den nachstehenden Figuren erläutert und beschrieben.

Die Figuren zeigen ein mögliches Ausführungsbeispiel der Erfindung und zeigen hierbei:
- Fig. 1: Aufsicht auf einen erfindungsgemäßen Rotations-Induktions-Wärmeerzeuger,
- Fig. 2: Eine Explosionsdarstellung wesentlicher Teile des erfindungsgemäßen Rotations-Induktions-Wärmeerzeugers,
- Fig. 3a,b: Explosionsdarstellungen des erfindungsgemäßen Wärmeerzeugers,
- Fig. 4a: Eine Explosionsdarstellung des Magnetrings einerseits und der Gleichstromspule andererseits,
- Fig. 4b: Explosionsdarstellung des Magnetrings mit Gleichstromspule und Kurzschlussring,
- Fig. 4c: Querschnitt durch den Aufbau des Magnetrings gemäß Fig. 4b,
- Fig. 5a: Explosionsdarstellung eines Polrads, bestehend aus einem inneren Polring, einem äußeren Polring und Polringträger,
- Fig. 5b: Explosionsdarstellung einer alternativen Ausführung des Polrads,
- Fig. 6a: Explosionsdarstellung eines mehrteilig aufgebauten Induktionsrings,
- Fig. 6b: Explosionsdarstellung einer alternativen Ausführung des Explosions- rings,
- Fig. 6c: Seitenansicht eines Induktionsrings,
- Fig. 6d: Weitere Seitenansicht eines Induktionsrings mit Querschnittsdarstellung,
- Fig. 7: Aufsicht und Schnittdarstellung durch einen erfindungsgemäßen Rotations-Induktions-Wärmeerzeuger,
- Fig. 8: Explosionsdarstellung des Magnetrings, Polrads und Induktionsrings mit Darstellung der Magnetfelder zwischen den Bauteilen.

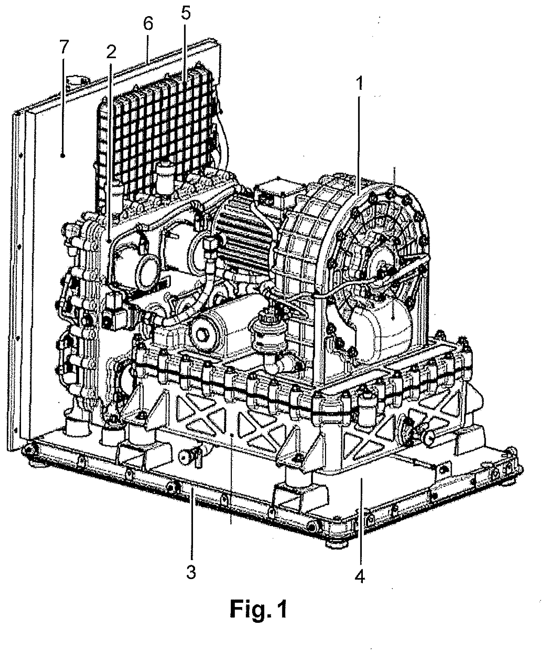

Figur 1 zeigt einen grundsätzlichen Aufbau des erfindungsgemäßen Rotations-Induktions-Wärmeerzeugers 1 und einen daran angeschlossenen Wärmetauscher, eine Mischbox 2 für die Warm-/Kaltwasseraufbereitung. Wie in Figur 1 zu sehen, werden dabei alle Teile der Einrichtung von einem Grundrahmen 3 aufgenommen. Dieser Grundrahmen weist eine Wärme- und Schalldämmmatte 4 auf und über die in Figur 1 dargestellte Einrichtung kann eine Wärme- und Schalldämmhaube übergestülpt werden, wobei die Haube Anzeige- und Bedienelemente aufweist und die Haube als solche auch eine abnehmbare oder zu öffnende Tür aufweist. Wie in Figur 1 ferner zu erkennen, weist der Wärmeerzeuger rückseitig eine Rückwand 6 auf, welche ebenfalls mit einer Wärme- und Schalldämmmatte an der Rückwand versehen ist und auch weist das Gerät eine Steuerelektronik 5 auf.

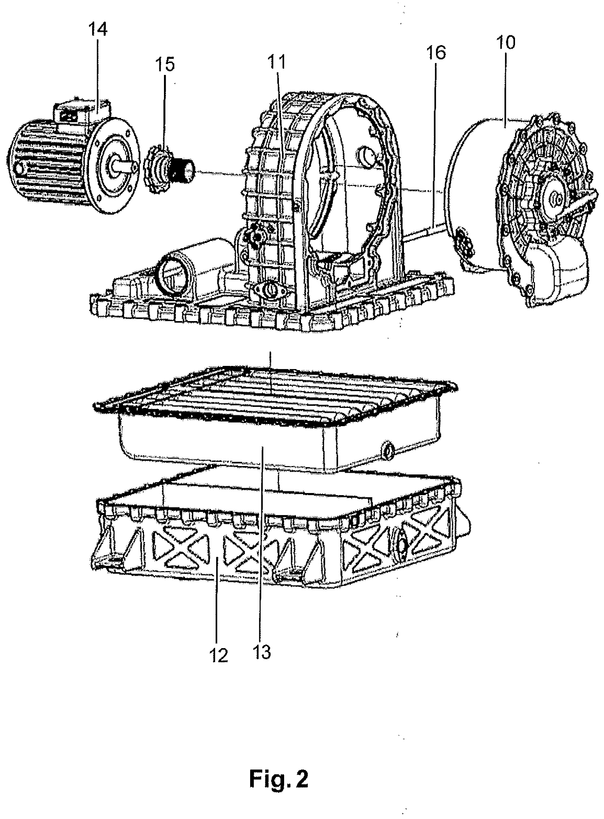

Figur 2 zeigt eine Explosionsdarstellung einiger Teile des erfindungsgemäßen Rotations-Induktions-Wärmeerzeugers nach Figur 1. Die Figur zeigt dabei ein unteres Wärmetauschergehäuse 12, einen Öl-Wassertrenner 13, oberes Wärmetauschergehäuse 11, ein Rotations-Induktions-Wärmeerzeuger-Einheit 10, einen Regler 16 für Öl-, Einspritzvolumen, einen Antriebsmotor 14 als typischen Antrieb, sowie eine Kupplung zur Verbindung von Rotations-Induktions-Wärmeerzeuger-Einheit 10 und Antriebsmotor 14.

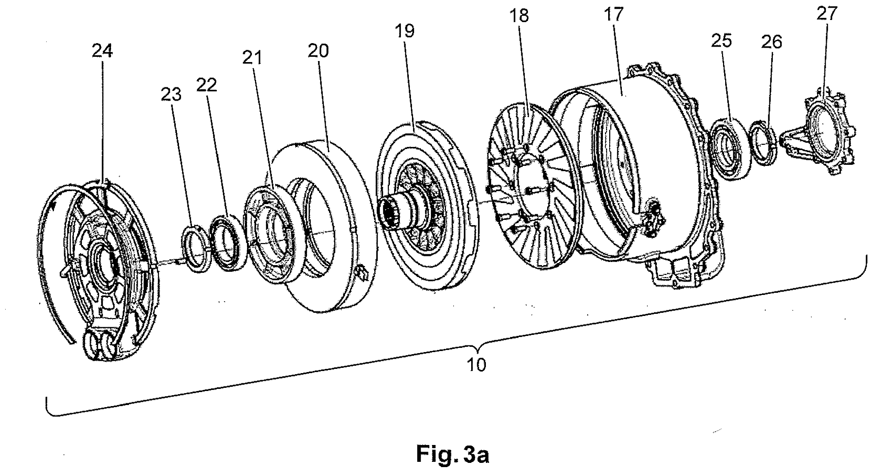

Figur 3a zeigt in der Explosionsdarstellung Einzelheiten des Rotations-Induktions-Wärmeerzeuger-Einheit 10, bestehend aus (von links nach rechts) einer Ölpumpe 24, einem Stützlager 22, einer Spannmutter Stützlager 23, einer Stützlagernabe 21, und einem Magnetring 20 mit Gleichstromspule 29 (feststehend), einem Polrad 19 (rotierend), einem Induktionsring 18 (feststehend), einem Gehäuse 17 des Rotations-Induktions-Wärmeerzeuger-Einheit 10, einem Führungslager 25 und einem Spannmutter Führungslager 26, sowie einem Frontdeckel 27.

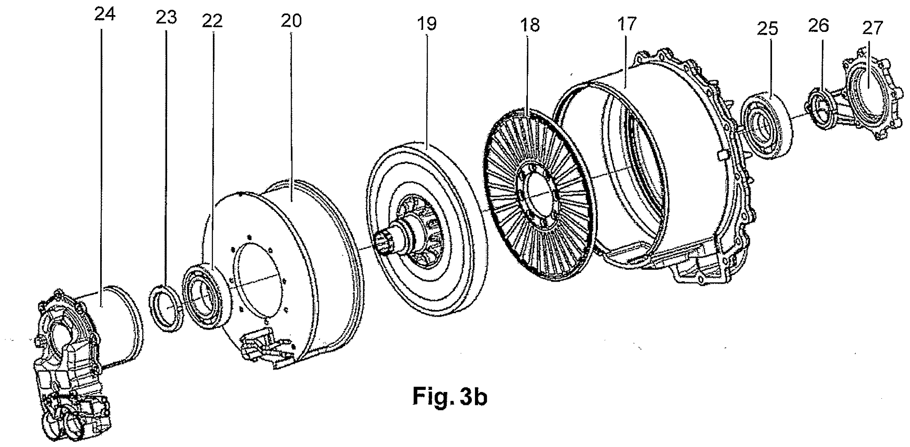

Figur 3b zeigt in der Explosionsdarstellung Einzelheiten des erfindungsgemäßen Rotations-Induktions-Wärmerzeugers mit Gleichstromerregung in einer etwas anderen Darstellung aber vergleichbarem Aufbau, wie in Figur 3a.

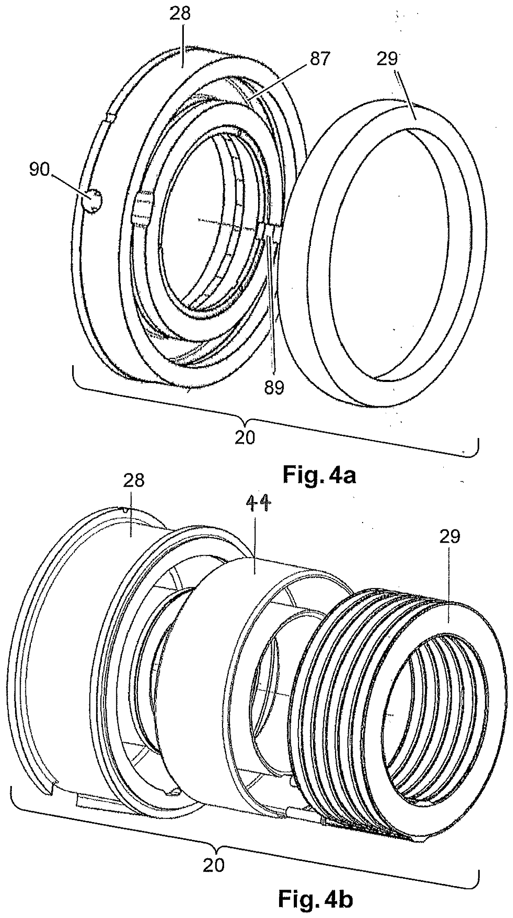

Der Aufbau und die Funktionsweise des Magnetrings 20, des Polrades 19 und des Induktionsringes 18 werden nachstehend erläutert. Erfindungsgemäß wird gemäß Figur 4a eine Gleichstromspule 29 in einem Magnetringgehäuse 28 des Magnetrings 20 aufgenommen. Die Gleichstromspule ist dabei mit dem Magnetringgehäuse vorzugsweise fest verbunden, wobei der Magnetring 20 mit seinem Magnetringgehäuse 28 selbst feststehend mit dem Gehäuse 17 des Rotations-Induktions-Wärmeerzeugers 1 verbunden ist und das von der Gleichstromspule 29 erzeugte magnetische Gleichfeld 51 wird über ein rotierendes mechanisches Bauteil, nämlich das Polrad 19 in ein magnetisches Wechselfeld 52 umgewandelt.

Figur 4b zeigt eine alternative Ausführungsform zu Figur 4a, wobei die Gleichstromspule 29 von einem Kurzschlussring 44 aufgenommen wird, welcher seinerseits in dem Gehäuse 28 des Magnetrings 20 angeordnet ist.

Der Kurzschlussring 44 besteht entweder aus gut elektrisch leitendem oder magnetischem Werkstoff oder aus einem gut elektrisch leitenden und unmagnetischen Werkstoff, z.B. Aluminium. Die integrale Aufnahme des Kurzschlussrings 44 mit der Gleichstromspule 29 in dem Magnetring 20 zielt darauf ab, Wirbelstromausprägungen im Magnetring zu steigern und dadurch den thermischen Effizienzwert (COP) zu erhöhen. Dabei ist darauf zu achten, dass der Kurzschlussring 44 bezüglich der elektrischen Leitfähigkeit und/oder der magnetischen Permeabilität eine höhere Wertigkeit aufweist als das Magnetringgehäuse. Wie in den Figuren 4a und 4b zu erkennen, ist das Magnetringgehäuse 28, aus einem im Querschnitt U-förmigen Ring gebildet und besteht aus ferromagnetischem Werkstoff, bevorzugt ist Reineisen. Durch den U-förmigen Ring wird eine Nut 87 gebildet, in welcher-siehe Fig. 4a - die Gleichstromspule 29 platziert wird oder in welcher - siehe Fig. 4b - der Kurzschlussring 44 zusammen mit der Gleichstromspule 29 platziert wird. Die Gleichstromspule 29 ist ihrerseits ebenfalls ringförmig ausgebildet.

Die Gleichstromspule 29 weist eine z. B. gewickelte Spule auf, welche aus einem Blechband, aus einem Runddraht oder auch aus einem Rechteckdraht bestehen kann. Aufgrund des magnetischen Gleichfeldes kann der Magnetring 20 aus Massivmaterial, geschichtete Blechen oder Sintermetall bestehen. Der Magnetring 20 weist eine innere und eine äußere nicht unterbrochene plane Fläche auf, wo das Magnetfeld abwechselnd z. B. als Südpol und als Gegenpol z. B. Nordpol, austritt und in baugleiche Flächen vom dem axial benachbarten Polrad 19 eintritt.

Alternativ ist auch denkbar, in den Magnetring statt der Gleichstromspule einen Dauermagneten zur Magnetisierung einzusetzen. Nachteil von Dauermagneten sind möglicherweise hohe Herstellungskosten, niedrige Curie-Temperatur und eine aufwendige Regeltechnik für die Einstellung der Heizleistung. Figur 4a ist auch ein Stromversorgungsanschluss 89 für die Gleichstromspule 29 gezeigt. Dieser Stromversorgungsanschluss wird durch eine Öffnung 90 im Magnetring 20 nach außen geführt, um somit außen einen Stromanschluss für die Gleichstromspule zu ermöglichen.

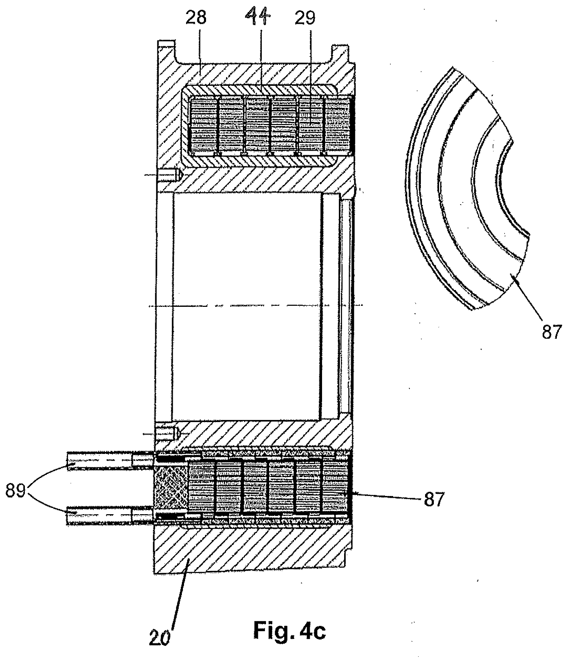

Figur 4c zeigt in einer Querschnittsdarstellung den Aufbau des Magnetrings 20 gemäß Figur 4b. Dabei ist zu sehen, dass der Magnetring 20 als U-förmiger Ring ausgebildet ist, welcher seinerseits den Kurzschlussring 44 und innerhalb des Kurzschlussrings 44 die Gleichstromspule 29 aufnimmt. Figur 4d 4c zeigt ferner einen Ausriss einer Seitenansicht des Magnetrings 20 mit den Seitenteilen 49, durch welche eine Nut 87 gebildet wird, innerhalb der die Gleichstromspule 29 zur Anlage kommt.

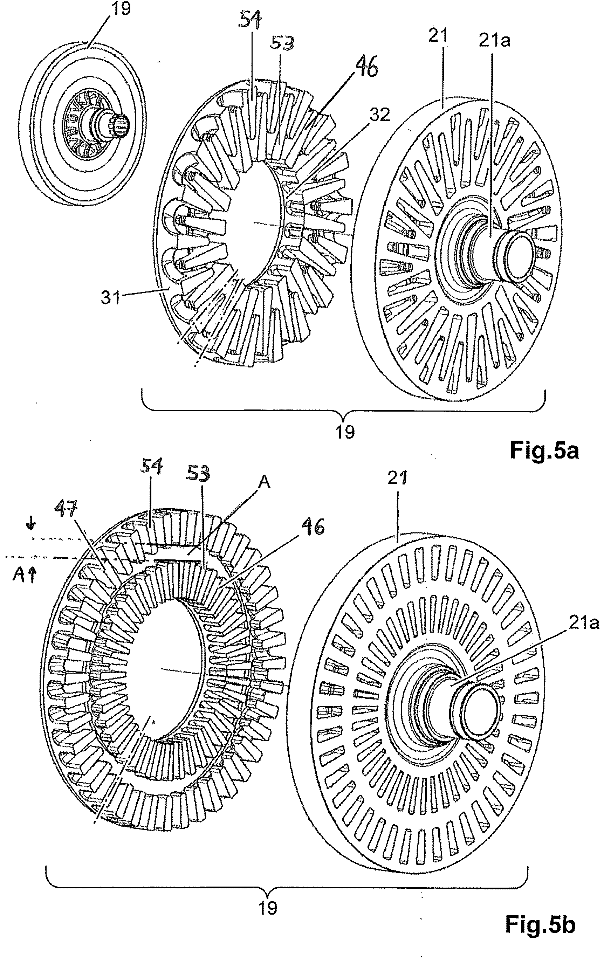

Um das Gleichfeld in ein zur Induktion erforderliches Wechselfeld zu wandeln, sieht die Erfindung gemäß Fig. 5 ein rotierendes mechanisches Bauteil, nämlich das Polrad 19, vor. Rotiert das Polrad 19 am statischen (also feststehenden) Magnetring 20 vorbei, ist diese Voraussetzung erfüllt.

Das Polrad 19 gemäß Fig. 5 besteht bevorzugt aus mehreren Komponenten, z. B. drei Komponenten, z.B. einem inneren Polring 53, einen äußeren Polring 54 aus ferromagnetischem Material, bevorzugt aus Reineisen und einem Polringträger 55 aus z. B. antimagnetischem Werkstoff aber bevorzugt aus einem gut elektrisch leitenden Werkstoff, z.B. Aluminium, Kupfer, Edelstahl. Der innere und der äußere Polring können aus Massivmaterial, geschichteten Blechen oder Ferrit bestehen.

Bei der Zusammensetzung vom Magnetring und dem Polrad liegen Magnetring 20 und Polrad 19 axial benachbart und zwischen ihnen wird ein möglichst kleiner Luftspalt (nicht dargestellt) ausgebildet.

Funktionsbedingt wird über diesen möglichst kleinen Luftspalt das magnetische Gleichfeld 51 vom Magnetring 20 zum Polrad 19 bei dessen Rotation in ein magnetisches Wechselfeld 52 vom Polrad 19 zum z. B. durch Schrauben festgesetzten, fest sitzenden (stehenden) Induktionsring 18 umgewandelt. Dabei spielt es keine Rolle, ob sich das Polrad zum Magnetring dynamisch oder starr verhält. Das magnetische Gleichfeld 51 wird verlustfrei, abgesehen von geringen Luftspaltverlusten, übertragen und bleibt auch im Polrad als Gleichfeld in dem, zum Magnetring näheren Bereich erhalten. Die Wechselfeldseite 52 des Polrads unterliegt den Gesetzen der Koerzitivkraft bzw. Ummagnetisierungsverlusten, dem Skin Effekt, oder Wirbelstromverluste bei Massivmaterial.

Die Figuren 5a und 5b sind zwei alternative Ausführungsformen, welche ein erfindungsgemäßes Polrad 19 zeigen.

Gemäß der ersten Variante, also gemäß Figur 5a ist der dem Induktionsring 18 zugewandten, also auf der dem Magnetring 20 abgewandten Seite des Polrads 19 mehrere Polfortsätze 46 und 47 angeordnet.

Bevorzugt liegt die Zahl der Polfortsätze bei mehr als zehn, bevorzugt bei mehr als 12.

In Figur 5a ist gut zu erkennen, dass der innere Polring 53 des Polrads mehr als zehn Polfortsätze 46, 47 aufweist, die sich radial von innen nach außen erstrecken.

Der äußere Polring 54 des Polrads 19 weist ebenfalls mehr als zehn Polfortsätze auf, die ebenfalls sich radial von außen nach innen erstrecken.

Wie in Figur 5a gut zu erkennen, sind die Polfortsätze 46 des inneren Polringes 53 und die Polfortsätze 47 des äußeren Polringes 54 versetzt gegenüber angeordnet, sodass sie ineinandergreifen (bzw. näher nebeneinanderliegen) und sich somit, wie in der Figur 5a zu sehen, in radialer Richtung, überlappen und so das magnetische Gleichfeld des Magnetringes in ein Wechselfeld im benachbarten Induktionsring 18 wandeln. Dadurch entsteht ein drehrichtungsabhängiges "Nord- und Süd"-Polverhältnis im Induktionsring 18, das heißt, pro Umdrehung des Polrades und je nach Polzahl wird entsprechend oft die Polarität gewechselt. Somit werden im Polrad 19 und im Induktionsring 18 Wirbelströme induziert. Bei der Variante gemäß Figur 5a überwiegt das negative Drehmoment dem positiven Drehmoment permanent.

In Figur 5a ist auch zu erkennen, dass der Polring 19 den Polringträger 55 mit einem Lagerstummel 21a aufweist. Der Polringträger 55 weist entsprechend Auslassungen auf, um die Polfortsätze 46 und 47 des inneren und des äußeren Polringes passgenau aufzunehmen.

Wie bereits erwähnt, besteht der Polringträger 55 bevorzugt aus antimagnetischen, bevorzugt gut elektrisch leitendem Material, z. B. Aluminium, Kupfer, Edelstahl. Aber auch eine Ausführung aus Kunststoff ist denkbar und erfindungsgemäß.

Figur 5b zeigt eine alternative Aufbau-Variante des Polrades 19.

Gut zu erkennen sind wiederum der innere Polring 53 und der äußere Polring 54 mit ihren entsprechenden Polfortsätzen 46 und 47. Bei dieser Variante liegt die Zahl der Polfortsätze deutlich über der Zahl (zehn) gemäß der Variante nach Figur 5a.

Die einzelnen Polfortsätze 46, 47 sind, wie in Figur 5b zu erkennen, mit ihrer Längsachse wiederum jeweils radial und in der gleichen Flucht ausgerichtet und somit liegen die Polfortsätze 46 des inneren Polringes 53 und die Polfortsätze 47 des äußeren Polringes 54 radial beabstandet (der Abstand ist vorbestimmt) voneinander.

Mithin ist die Länge der Polfortsätze 46, 47 gemäß der Variante nach Figur 5b kürzer gehalten als die Länge der einzelnen Polfortsätze gemäß Figur 5a und somit weisen die Polfortsätze 46 und 47 der inneren und äußeren Polringe keine Überlappung auf, aber wie erwähnt, gibt es eine deutlich größere Polzahl bei gleicher Baugröße (Außendurchmesser des Polrades), gemäß der Variante nach Figur 5a.

Die Zahl der Polfortsätze, liegen gemäß der Variante nach Figur 5b deutlich über 20, vorzugsweise bei 40 oder mehr, oder einem Zahlenwert aus dem Bereich zwischen 10 und 100, oder mehr.

Bei der Variante des Polrades gemäß Figur 5b wird kein klassisches magnetisches Wechselfeld (abwechselndes Nord-/Südfeld im Induktionsring erzeugt, sondern der magnetische Kreis wird drehzahlabhängig und polzahlabhängig zeitlich unterbrochen (zerhackt). Der permanente Auf- und Abbau des Magnetfeldes erzeugt somit ebenso Wirbelströme im Polrad 19 und Induktionsring 18. Anders als bei der Variante gemäß Figur 5a zeigt die Variante nach Figur 5b periodisch abwechselnd ein positives- sowie negatives Drehmoment, wobei auch hier das negative Drehmoment dem positiven Drehmoment überwiegt.

Wie auch in Figur 5b gut zu erkennen, ist der Polringträger 55 entsprechend mit Aussparungen ausgestattet, in denen die Polfortsätze 46 und 47 der inneren und äußeren Polringe passgenau aufgenommen werden, sodass die Polringe 53, 54 in dem Polringträger 55 gehalten werden. Gut zu erkennen ist auch die entsprechende Lagerung 21a.

Der Polringträger 55 hat durch seine innerliche Steifigkeit zur Aufnahme aller, auf die Polringe 53, 54 einwirkenden magnetischen Kräfte zu sorgen.

Daher bietet sich als Werkstoff für den Polringträger 55 insbesondere ein Metall an, welches antimagnetisch aber bevorzugt aus einem gut elektrisch leitenden Werkstoff besteht.

Bei der Gestaltung des Querschnitts der Polfortsätze 46 und 47, bestehen bestimmte Freiheiten.

Wie gut zu erkennen, sind die Polfortsätze 46 und 47 gemäß der Varianten nach Figur 5a und 5b im Querschnitt verjüngend ausgebildet, es ist aber auch denkbar, diese im Querschnitt rechteckig auszuführen. Es ist auch möglich, die Polzahl, also die Zahl der Polfortsätze des inneren Polringes und des äußeren Polringes unsymmetrisch, also ungleich, auszuführen.

Wie erwähnt, kann der Polringträger 55 aus unmagnetischem Werkstoff, kann aber als elektrisch leitend oder elektrisch isolierendem Werkstoff ausgeführt sein. Eine solche Materialwahl ist auch für die Polringe möglich, diese sollten dann aber elektrisch leitend oder nichtleitend ausgeführt sein.

Das hängt vom jeweiligen gewollten thermischen Leistungspotential ab. Bei elektrisch leitenden Materialien und Massivbauteilen werden ebenso wie im Induktionsring auch im Polrad Wirbelströme induziert, die die Heizleistung erheblich erhöhen.

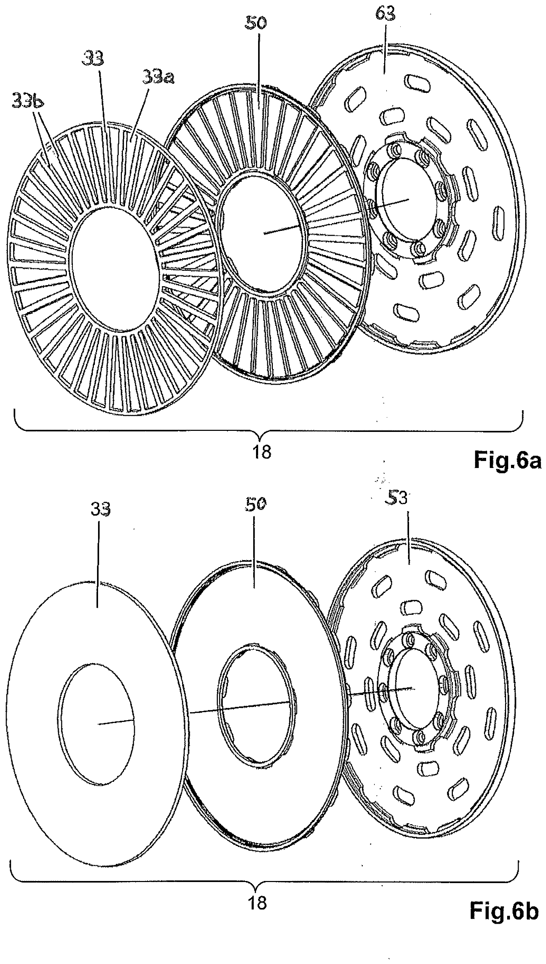

Figur 6a zeigt eine erste Variante des Induktionsringes 18 in Explosionsdarstellung. Wie zu erkennen, weist der Induktionsring 18 gemäß Figur 6a einen dreiteiligen Aufbau auf und unterliegt einer ähnlichen Strukturierung, wie die Polringe.

Auch hier sind Vertiefungen 33a in Form von Taschen gebildet, die eine homogene Ausprägung des Magnetfeldes verhindern. Je homogener das Magnetfeld im Induktionsring ausgeprägt ist, umso höher ist die Tendenz zum Bremsen, also zum negativen Drehmoment.

Gemäß der Figur 6a ist der erste Teil 33 (Scheibenform) des Induktionsringes 18 aus einem ferromagnetischen Werkstoff ausgebildet, welcher auch elektrisch leitende Eigenschaften aufweisen kann.

Gemäß dem ersten Teil 33 des Induktionsringes 18 schließt sich axial ein magnetischer, elektrischer Isolator 50 als zweiter Teil an, welcher benachbart, (aber räumlich getrennt) zum ersten Teil 33 liegt. Dieser Isolator 50 ist nicht zwingend notwendig, wenn er aber eingesetzt wird, hat diese Maßnahme zur Folge, dass die positiven Drehmomentanteile erhöht werden, aber die Wirbelstromausprägung im gesamten System eher reduziert wird.

Figur 6b zeigt, dass es auch möglich ist, einen ersten Teil 33 des Induktionsringes 18 als homogene Scheibe auszubilden, die anders als gemäß der Variante nach Figur 6a, also keine Vertiefungen 33a aufweist.

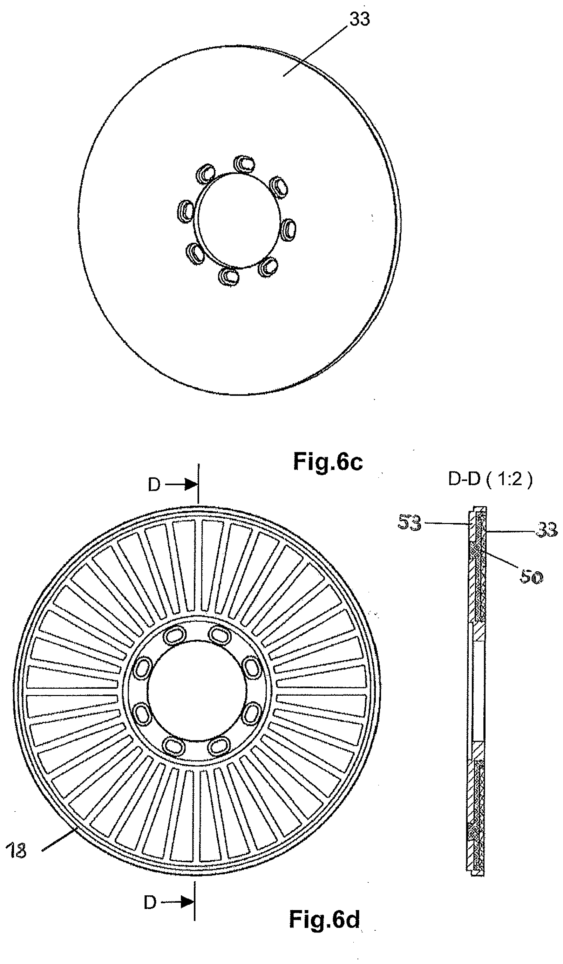

Gemäß Figur 6c ist eine weitere Variante des Induktionsrings gezeigt, welcher nicht aus einem ferromagnetischen Werkstoff gebildet ist, aber aus einem Werkstoff mit guten elektrischen Eigenschaften.

Es ist gleichwohl auch möglich, als Werkstoff für den Induktionsring 18 einen ferromagnetischen Werkstoff zu verwenden, auch wenn dies unter Umständen nicht so vorteilhaft ist.

In den Figuren 6a und 6b ist zu erkennen, dass an die vom Polrad 19 abgewandte Seite des Induktionsrings 18 eine weitere Scheibe 63 (dritter Teil) aus einem Material mit guter Wärme-Leitfähigkeit angebracht ist. Die Stärke dieser Scheibe unterliegt keiner bestimmten Vorgabe. Je besser die Wärme-Leitfähigkeit des Materials der Scheibe ist, umso besser ist die Überleitung der Wärme aus dem Induktionsring 18 in die Scheibe 63. Die Scheibe 63 wird von einem flüssigen Wärmeträgermedium umspült und sorgt für einen fast verlustfreien Wärmetransport im System. Die Scheibe 63 ist zugleich mechanischer Träger des Induktionsrings und mit im Gehäuse 17 verschraubt und somit innerhalb des erfindungsgemäßen Vorrichtung feststehend angeordnet.

Denkbar ist auch die dem Wärmeträgermedium zugewandte Seite zu profilieren, um somit die Konvektionsfläche zu vergrößern.

Der Induktionsring (Fig. 6) unterliegt einer ähnlichen Strukturierung wie die Polringe.

Um die Wirbelstromintensität zu verstärken, sind die Vertiefungen bzw. Taschen (Fig. 6a Pos. 33a) im Induktionsring 18 mit einem guten elektrisch- und wärmeleitfähigen Material gefüllt. Zudem ist auf der dem Polrad 19 abgewandten Seite, wie erwähnt, eine Scheibe aus dem gleichen Material aufgebracht. Die Taschen 33a werden durch die in Fig. 6a gezeigten Taschenkanten 33b (Stege) definiert.

Es ist auch denkbar, den Induktionsring ohne Füllmaterial zu bilden. Das bewirkt zwar eine Verschlechterung der Heizleistung bei gleicher primärer Energieaufwendung, beeinflusst aber nicht die grundsätzliche Funktion an sich.

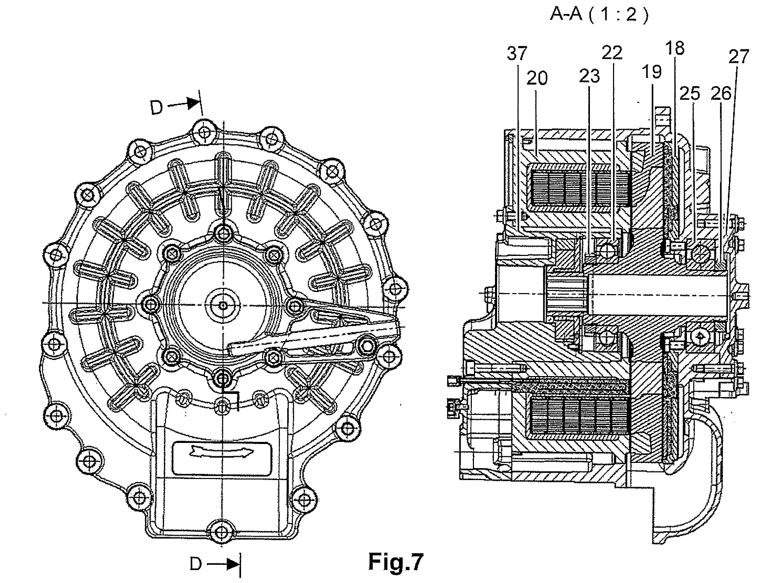

Figur 7 zeigt noch einmal die Ansicht und einen Querschnitt durch die gesamte erfindungsgemäße Vorrichtung, also den Rotations-Induktions-Wärmeerzeuger mit allen Teilen der Vorrichtung im Kompaktaufbau.

Zur Funktionsweise der erfindungsgemäßen Vorrichtung sei auf Folgendes hingewiesen.

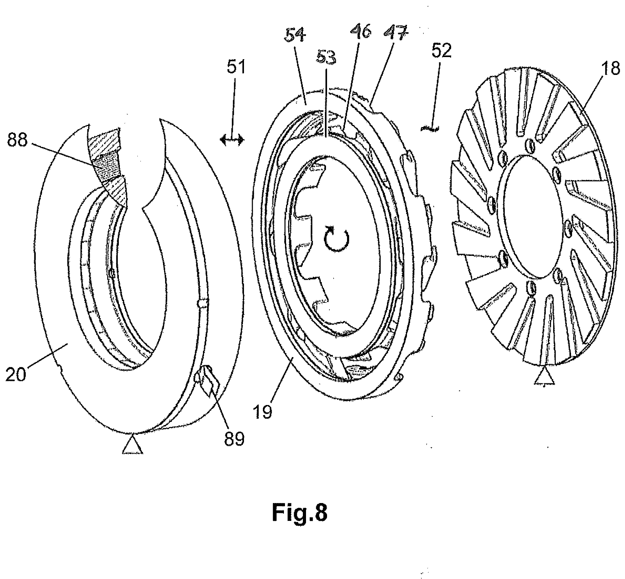

Die Figur 8 zeigt in der Explosionsdarstellung die axiale Nebeneinander-Anordnung vom Magnetring 20, Polrad 19 und Induktionsring 18 zur Darstellung des Magnetflusses im Magnetraum. Bei dem erfindungsgemäßen Rotations-Induktions-Wärmeerzeuger ist der Magnetring 20 mit der Gleichstromspule 29 sowie der Induktionsring 18 statisch, d. h. im Maschinenkörper feststehend angeordnet, während hingegen das Polrad 19 als dynamisches Teil eine Rotationsbewegung ausführen kann.

Zwischen dem Magnetring 20 und dem Polrad 19 ist dabei eine magnetische Gleichfeldzone 51 ausgebildet, während zwischen dem Polrad 19 und dem Induktionsring 18 eine magnetische Wechselfeldzone ausgebildet ist.

Die optimale Systemwirkung der erfindungsgemäßen Einrichtung ist gegeben, wenn sich grundsätzliche konträre Merkmale, nämlich positives (Antreiben) und/oder negatives (Bremsen) Drehmoment im selben zeitlichen Ablauf im Gleichgewicht stehen. Das ist optimal, aber nicht immer erreichbar, sondern systemisch neigt die erfindungsgemäße Vorrichtung zu einem Überhang zum negativen Drehmoment. Die Systemwirkung pro Umdrehung bestimmt die Anzahl der Polfortsätze vom Polrad und durch die Taschenanzahl im Induktionsring. Die Kanten der Polfortsätze 46, 47 der Polringe 53, 54 stehen dabei bevorzugt parallel oder konträr zu den Taschenkanten 33b im Induktionsring 18. Die Winkellage der jeweiligen Kanten zueinander bestimmt die Differenz zwischen positiven und/oder negativen Drehmoment. Das positive Drehmoment wirkt solange mit Überhang, bis sich das magnetische Moment zwischen den inneren- und äußeren Polflächen der Polringe zu den Polflächen vom Induktionsring neutralisiert. Danach wirkt das negative Drehmoment im umgekehrten Sinn im Überhang. Die höchste Energieeffizienz herrscht, wenn beide Drehmomente im zeitlichen und kinetischen Gleichgewicht stehen. Schwindet dieses Gleichgewicht in ein zeitliches und kinetisches Ungleichgewicht Richtung negatives Drehmoment, mindert sich die Wärmeenergieeffizienz, umgekehrt steigt die Wärmeenergieeffizienz.

Idealerweise soll das Verhältnis zwischen positiven und/oder negativen Drehmoment nicht über 1:1,03 zugunsten negativen Drehmoment liegen. Diese leichte Abbremsung des Polrads bewirkt, dass sich die volle Erregerleistung vom Wärmeerzeuger einstellen kann und somit die maximale Wärmeleistung abrufbar ist. Je größer die Differenz zwischen Abbremsen und Antreiben des Polrads hinsichtlich abbremsen ist, umso schlechter ist die thermische Effizienz des Wärmeerzeugers.

Wirkt das negative Drehmoment im Überhang, lässt sich die Rotationsenergie aus der Masseträgheit aller rotierenden Bauteile wirkungsvoll nutzen, um die kontinuierliche Abbremsung des Polrads zu vermindern, bis sich wieder ein Überhang von positiven Drehmoment einstellt.

Überwiegt permanent das positive Drehmoment dem negativen Drehmoment, so beschleunigt das Polrad stetig bis über die kritische Drehzahl und der Wärmeerzeuger würde beschädigt. Deshalb ist die Erregerleistung so lange zu reduzieren, bis sich die Drehzahl auf das vorgegebene Maß einstellt. Daraus ergibt sich eine Größe der Wärmeleistung, die sich äquivalent aus der Differenz zum positiven und zum negativen Drehmoment verhält. Erfinderisch ist auch denkbar, das Polrad zu bremsen, die volle Erregerleistung anzusteuern und so die daraus gewonnene Energie ins System zurückzuführen. Dazu dient eine Zusatzeinrichtung, bei der das Wärmeträgermedium in den Luftspalt zwischen Polrad und Induktionsring eingespritzt und so mittels Reibwiderstand gebremst wird. Die eingespritzte Flüssigkeitsmenge lässt sich über einen dementsprechenden Regler exakt dem Erfordernis abstimmen.

Der erfindungsgemäße Rotations-Induktions-Wärmeerzeuger verfügt über wenigstens drei Wärmequellen, jedenfalls Quellen, aus denen Wärme erzeugt wird und somit abgefüllt werden kann. Diese Quellen sind der Magnetring, das Polrad, wie auch der Induktionsring. Im Polrad entsteht dabei eine Wärme im geringeren Maße als im Magnetring, wobei die Wärmeerzeugung im Induktionsring größer sein kann als im Magnetring, konstruktionsbedingt kann aber auch die Wärmeerzeugung im Magnetring die Wärmeerzeugung im Induktionsring überwiegen.

Gleichstromspulen sind Ohm'sche Widerstände die, die eingebrachte elektrische Energie zu 100% in thermische Energie umwandeln.

Um die Wärme effizient über das Wärmeträgermedium aus den Wärmequellen (Temperaturquellen) Induktionsring und Polrad abzuführen, sieht die Erfindung z.B. eine Pumpe vor. Die Pumpe ist bevorzugt als G-Rotorpumpe ausgebildet, ein inneres Pumpenrad wird direkt mit einem Adaptermitnehmer über die Achse des Polrades angetrieben.

Als Wärmeträgermedium im Wärmekreis Wärmeerzeuger/Wärmetauscher (Fig. 2 Pos. 11 - 13) eignet sich bevorzugt standardisiertes und bevorzugt temperaturstabiles Hochtemperaturöl. Auch jede andere schmierfähige Flüssigkeit ist denkbar. Öl hat den Vorteil, dass die Schmierung von Lagerung und Pumpe nicht separat ausgeführt sein muss und keine Abdichtung vom Öl zum Wasser erforderlich ist. Zudem weist Öl einen wesentlich höheren Siedepunkt als Wasser auf. Der hohe Siedepunkt des Öls lässt im Wärmekreis hohe Temperaturen zu und deshalb entsteht kein Überdruck. Das erspart vorteilhaft kostspielige Überdruckmaßnahmen. Erfinderisch ist auch denkbar, bei entsprechender Auslegung der Bauteile und Abdichtmaßnahmen gegen Überdruck das Wärmeträgermedium mit niedrigerem Siedepunkt z. B. Wasser einzusetzen.

Außerdem sieht die Erfindung Temperaturkaskaden im Heizsystem vor. Der Wärmeerzeuger bildet eine Kaskade 1 mit möglicher Öltemperatur bis 250°C, Wärmetauscher und Mischbox bilden eine Kaskade 2 mit möglicher Wassertemperatur bis 99°C, der eigentliche Heizkreis bildet eine Kaskade 3 mit üblicher Wassertemperatur von 30 - 60°C. Dem liegt zugrunde, dass zum Erzeugen der Übertemperaturen nicht mehr Energie, abzüglich höherer Wärmeabstrahlenergie, aufgewendet werden muss, als bei derzeitigen üblichen Umlauftemperaturen von max. 60°C. Die Kaskadentechnik steigert zusätzlich die Energieeffizienz.

Die Übertragung der Wärme vom Hochtemperaturöl in der ersten Kaskade zu einem anderen Medium, z. B. Wasser in der zweiten Kaskade, erfolgt über einen üblichen Wärmetauscher und hierzu ist insbesondere auch ein Öl-Wassertrenner 13 vorgesehen, so dass die verschiedenen Wärmemedienkreise keine stoffliche Verbindung miteinander aufweisen und somit die Wärmemedien sich nicht miteinander vermischen können.

Eine Abdeckhaube mit wärmedämmender Auskleidung verringert zusätzlich die thermische Abstrahlung der erfindungsgemäßen Heizeinrichtung.

Die Erfindung stützt sich auf die Tatsache, dass externe elektrische und kinetische Energie permanent zugeführt werden muss. Als elektrisch- kinetische Energiezuführung dient bevorzugt ein herkömmlicher Elektromotor 45. Es ist auch denkbar, jede andere Form zur externen kinetischen Energiezuführung, z. B. Verbrennungsmotor, zu wählen. Der Motor beschleunigt das Polrad auf eine vorbestimmte (wirkungsvolle) Drehzahl, bevorzugt sind 3000 U/min. Hauptaufgabe des Motors ist, die kinetische Differenzenergie zwischen Bremsen und Antreiben permanent einzubringen. Neigt der Energieüberhang Richtung Bremsen ist der Motor aktiv, neigt der Energieüberhang Richtung Antreiben ist der Motor inaktiv.

Der Motor ist vorzugshalber flüssigkeitsgekühlt und der Kühlkreislauf des Motors ist z. B. in den Heizkreis eingebunden. Somit lässt sich auch diese Verlustenergie für das Heizsystem nutzen.

Als elektromagnetische Energiezuführung ist Gleichstrom vorgesehen. Beide, Elektromotor und Gleichstromspule benutzen als Quelle bevorzugt eine übliche Stromversorgung.

Die Herkunft der elektrischen Energiequelle ist nicht Gegenstand der Erfindung.

Bevorzugt ist aber eine regenerative Energiequelle, z. B. eine Windenergieanlage, eine Photovoltaikanlage oder dergleichen.

3000 U/min ist eine bevorzugte Drehzahl, die sich aus 2 poligen Elektromotoren bei 50 Hz Netzfrequenz ohne Regelmaßnahmen ergibt. Erfinderisch ist auch denkbar, die Drehzahl z. B. mittels Umrichtersteuerung zu erhöhen oder zu senken. Betrifft es die Drehzahlabsenkung, stellt das kein energetisches Problem dar, weil die Ummagnetisierungsverluste im Elektromotor durch Reduzieren der Frequenz abnehmen und dadurch dem System zugutekommen. Wird die Drehzahl erhöht, sind mechanische Maßnahmen vorteilhafter. Bei Erhöhung der Drehzahl mittels Frequenzwandlung eines Umrichters steigen Ummagnetisierungsverluste und Erregerstrom im Elektromotor. Das bedeutet höherer Energieverbrauch als Energienutzen. Deshalb kann die Erfindung ein mechanisches Getriebe, bevorzugt als Planetengetriebe, vorsehen. Das Getriebe nimmt eingangsseitig die Antriebswelle des Antriebs aus und treibt ausgangsseitig zum Beispiel direkt das Polrad an.

Die Erfindung sieht in der Drehzahlerhöhung eine Steigerung der Heizleistung bei gleicher Baugröße vor. Anders, wie bei elektrischen Maschinen bedingt, wo durch Erhöhung der Frequenz die Ummagnetisierungsverluste ansteigen und die Energieeffizienz abnimmt, steigt hier die Wirbelstromdichte und damit auch die Wärmeeffizienz.

Es ist auch denkbar, die Effizienz des Wärmeerzeugers mittels selbsterlernender Software zu steigern und dauerhaft darauf einzustellen. Bei herkömmlichen "Heizsystemen", wo fossile oder erneuerbare Energieträger verbrannt werden, kann die Brenntemperatur nur gering bis gar nicht beeinflusst werden. Das gilt ebenso für Wärmepumpen und Solartechnik, auch hier ist die im Trägermedium Luft, Wasser, Erde und Sonne gespeicherte Energie nicht vom Wärmeerzeuger selbst beeinflussbar.

Anders als bei bekannten Systemen verhält sich die Situation gemäß Erfindung. Hier ist sehr wohl bei Eingriff in grundlegende mechanische und physikalische Strukturen eine Steigerung der Energieeffizienz möglich. Beim E-Motor ist die elektrische Primärenergie über Drehzahl und Lastverhalten effektiv beeinflussbar. Ebenso beim Wärmeerzeuger, auch da sind Möglichkeiten zur Energieeffizienzsteigerung gegeben. Es ist leicht durch Tests herauszufinden, bei welcher Drehzahl die Ummagnetisierungsverluste am kleinsten

sind, die größte magnetische Eindringtiefe gegeben ist und daraus die beste Wirbelstromausprägung resultiert. In Summe aller Faktoren ergibt das eine weitere Verbesserung der Energieeffizienz.

Der thermische Wirkungsgrad des erfindungsgemäßen Rotations-Induktions-Wärmeerregers mit Gleichstromerreger liegt bei maximal 98%, einige wenige Konvektionsverluste sind unvermeidbar.

Die Erfindung erfüllt das Ziel, eine hohe Energieeffizienz COP (Leistungszahl) >10 zu erreichen. Die hohe Leistungszahl stützt sich dabei auf ein im Eisen charakterisiertes magnetisches Potential (Vektorpotential intB x Hdiv bzw. intH x Bdiv) aus der Gleichstromerregung, das im System in Form von Magnetkraft F=F_{E}+F_{B} in kinetische Energie umgewandelt wird. Dazu kommt kinetische Energie aus dem Antrieb, um das Polrad am Laufen zu halten.

Beides zusammen ergibt kinetische Energie abzüglich der Antriebsverluste.

Diese kinetische Energie wird in positives und negatives Drehmoment umgewandelt. Daraus ergibt sich ein Delta (Unterschied), aus dem sich die Größen der extern einzubringenden Energie (bzw. Leistung) errechnen.

Damit das System bestmöglich ausgeführt werden kann, spielt der Magnetwertstoff, das magnetische Gleichfeld und die Umwandlung eines magnetischen Gleichfeldes ein magnetisches Wechselfeld mittels der mechanischen Vorrichtung die wesentliche Rolle.

Aus der hohen magnetischen Sättigung mittels geringer magnetischer Feldstärke resultiert eine schmale Hysteresekurve. Die schmale Hysteresekurve bedeutet, dass das magnetische Potential klein ist. Umgekehrt, je höher das magnetische Potential, umso höher auch die einzubringende externe Erregerleistung (Strom x Spannung) und in der Folge eine Minderung der Leistungsfähigkeit.

Ebenso verursacht hohes magnetisches Potential auch hohe Hystereseverluste (Ummagnetisierungsverluste), die nachteilig im System die Wirbelstromausprägung im Induktionsring reduzieren, aber vorteilhaft im System nur geringe Auswirkungen haben.

Die Wirbelstromdichte bestimmt laut Ohm'schem Gesetz die thermische Leistungsdichte.

Hierzu einige Beispiel: mit Reineisen ist eine Leistungszahl COP >10 erreichbar. Mit Trafoblech bzw. Stahlguss ist eine Leistungszahl von max. COP = 1,5 erreichbar, mit legiertem Stahlblech eine Leistungszahl von max. COP = 1,3 erreichbar.

Die magnetische Wertigkeit von Reineisen zu herkömmlichen Magnetwerkstoffen:
Für Reineisen sind bei 1,6 T (Tesla) circa 10 A/m erforderlich, für Trafobleche und Stahlguss bei 1,6 Tesla sind 4000 A/m erforderlich, für legiertes Stahlblech bei 1,6 Tesla sind 6000 A/m erforderlich, für Gusseisen bei 1,2 Tesla sind 21000 A/m erforderlich.

Die Aufstellung macht deutlich, um wieviel mehr Erregerleistung notwendig ist, um auf die magnetische Flussdichte von 1,6 T (Tesla) zu kommen, bei gleicher Windungszahl.

Reineisen hat, wie erwähnt, einen sehr hohen Sättigungsgrad (2,5 T zu 1,7 T bei Trafoblech), eine schmale Hysteresekurve und ein geringes magnetisches Potential.

Reineisen als idealer Magnetwerkstoff zeichnet sich besonders dadurch aus, dass die magnetische Sättigung, die Permeabilität und die Reminiszenz sehr hoch sind, die Koerzitivfeldstärke sehr niedrig ist. Die hohe Reminiszenz bewirkt, dass beim Abschalten des Erregerstroms die magnetische Flussdichte nur geringfügig absinkt. Diese Eigenschaft lässt sich bei einer pulsalten modulierten Schaltung des Erregerstroms vorteilhaft nutzen und ergibt einen Stromspareffekt von mehr als 50% an der Stromquelle. Die niedrige Koerzitivfeldstärke bewirkt, dass bei hoher Frequenz nur geringe Ummagnetisierungsverluste auftreten. Das lässt einen kleinen Erregerstrom zu. Es gibt auch noch andere hochfrequente Magnetwirkstoffe, die dem Reineisen sehr nahekommen, oder dieses unter Umständen auch übertreffen. Deshalb umfasst der Begriff "Reineisen" gemäß der vorliegenden Anmeldung auch solche Werkstoffe, die eine magnetische Sättigung von > 1,5T eine Anfangspermeabilität von µ_{A} > 6000 aufweisen.

Eine ebenso wichtige Rolle spielen die Geometrie von Polrad und Induktionsring. Diese bestimmt, in welchem Verhältnis Antrieb zum Bremsen steht. Weil daraus einzig das Delta aufzubringende kinetische Energie bestimmt, ist es wichtig, ein möglichst kleines Delta zu erzielen. Die Höhe der inneren kinetischen Energie, resultierend aus der Magnetkraft, hat keinen Einfluss auf die Leistungszahl und ist auch in diesem Fall irrelevant. Einzig die Wirbelströme bestimmen die thermische Energie und nicht die kinetische Energie. Ebenso bestimmen die Wirbelströme aufgrund der vektorischen Unterordnung in der Geometrie auch die potentielle Energie aus dem magnetischen Moment (Eₚₒₜ = →-m x B = →-m B cos Θ)

Das heißt, es lässt sich kein direkter Zusammenhang zwischen magnetischen Moment und Drehmoment erkennen. Diese Freiheit ist auch so gewollt, denn sie bestimmt die Höhe der Leistungseffizienz.

### Bezuqszeichen

- 1: Rotations-Induktions-Wärmeerzeuger
- 2: Mischbox
- 3: Grundrahmen
- 4: Wärme- und Schalldämmmatte
- 5: Steuerelektronik
- 6: Rückwand
- 7: Wärmedämmung Rückwand
- 9: Anzeige- und Bedienelement
- 10: Rotations-Induktions-Wärmeerzeuger-Einheit
- 11: oberes Wärmetauschergehäuse
- 12: unteres Wärmetauschergehäuse
- 13: Öl-Wassertrenner
- 14: Antriebsmotor (z.B. Elektromotor)
- 15: Kupplung
- 16: Regler
- 17: Gehäuse
- 18: Induktionsring
- 19: Polrad
- 20: Magnetring
- 21: Stützlagernabe
- 21a: Lagerung/Lagerstummel
- 22: Stützlager
- 23: Stützlager
- 24: Ölpumpe
- 25: Führungslager
- 26: Führungslager (Stützlager)
- 27: Frontdeckel
- 28: Magnetringgehäuse
- 29: Gleichstromspule
- 30: Scheibe
- 31: äußere Polring
- 32: Polrad
- 33: erster Teil (Scheibe) des Induktionsrings
- 33a: Vertiefungen
- 33b: Taschenkanten
- 38: Vertiefung
- 44: Kurzschlussring
- 45: Elektromotor
- 46: Polfortsätze
- 47: Polfortsätze
- 48: Scheibe
- 49: Seitenteile
- 50: Isolator, zweiter Teil (Scheibe) des Induktionsrings
- 51: magnetisches Gleichfeld
- 52: magnetisches Wechselfeld
- 53: innerer Polring
- 54: äußerer Polring
- 55: Polringträger
- 63: dritter Teil (Scheibe) des Induktionsrings
- 87: Nut
- 88: Gleichstromspule
- 89: Stromanschlüsse
- 90: Öffnung

## Patentansprüche

1. Rotations-Induktions-Wärmeerzeuger mit Gleichstromerregung zum Erwärmen von festen oder flüssigen oder gasförmigen Stoffen, **dadurch gekennzeichnet, dass** das zur Induktion bzw. zum Erzeugen von induktiver Wärme erforderliche magnetische Wechselfeld mit einer Gleichstromspule, ein magnetisches Gleichfeld erzeugt wird und in dieses magnetische Gleichfeld über ein rotierendes, mechanisches Bauteil in ein magnetisches Wechselfeld umgewandelt wird, wobei eine Gleichstromspule von einem Magnetring (20) aufgenommen und hiermit vorzugsweise fest verbunden ist, wobei der Magnetring (20) feststehend mit dem Gehäuse (17) des Rotations-Induktions-Wärmeerzeugers (1) verbunden ist, und wobei das von der Gleichstromspule (29) erzeugte magnetische Gleichfeld (51) über ein rotierendes mechanisches Teil, nämlich ein Polrad (19) in ein magnetisches Wechselfeld (52) umgewandelt wird, wobei das Polrad (19) aus einem inneren Polring (53), einem äußeren Polring (54) und einem Polringträger (21, 24) besteht, durch den das magnetische Gleichfeld (51) in ein 15 Wechselfeld (52) in ein axial zum Polrad (32) benachbarten Induktionsring (18) umgewandelt wird, wobei der innere und der äußere Polring mehrere radial ausgerichtete Polfortsätze (46, 47) aufweisen, bevorzugt mehr als zehn, die entweder
a) ineinandergreifen, d.h. teilweise radial nebeneinander angeordnet sind bzw. sich überlappen (Fig. 5a) oder
b) sich nicht überlappen, sondern die Polfortsätze (46) des inneren Polrings (53) radial beabstandet sind von den Polfortsätzen (47) des äußeren Polrings (54), wobei die Polfortsätze des inneren und äußeren Polrings einen vorbestimmten Abstand (A) zueinander aufweisen und vorzugsweise die Zahl der Polfortsätze des inneren Polrings (53) in etwa der Zahl der Polfortsätze des äußeren Polrings (54) entspricht, 25 oder gleich ist.

2. Rotations-Induktions-Wärmeerzeuger nach Anspruch 1, **dadurch gekennzeichnet, dass** der Rotations-Induktions-Wärmeerzeuger somit bevorzugt einen elektrischen/kinetischen Wirkungsgrad von weniger als 10%, vorzugsweise sogar unter 2% aufweist 30 und einen COP-Faktor (Coefficent of Performance; Leistungszahl) von mehr als 3, vorzugsweise einem Wert aus dem Bereich zwischen 6 und 50 aufweist

3. Rotations-Induktions-Wärmeerzeuger nach einem der vorhergehenden Ansprüche, **dadurch gekennzeichnet, dass** der Induktionsring (18) aus
a) einem ferromagnetischen Werkstoff besteht, der auch gute elektrische Eigenschaften aufweisen kann oder
b) aus einem Werkstoff besteht, der elektrisch leitend ist, allerdings nicht ferromagnetisch ist.

4. Rotations-Induktions-Wärmerzeuger nach einem der vorhergehenden Ansprüche, **dadurch gekennzeichnet, dass** die Wärme im Magnetring (20), im Polrad (19), wie auch im Induktionsring (18) entsteht, wobei die im Polrad (19) entstehende Wärme geringer ist als die im Magnetring.

5. Rotations-Induktions-Wärmeerzeuger nach einem der vorhergehenden Ansprüche, **dadurch gekennzeichnet, dass** der Induktionsring (18) aus mehreren miteinander verbunden Scheiben besteht.

6. Rotations-Induktions-Wärmeerzeuger nach Anspruch 5, **dadurch gekennzeichnet, dass** der Induktionsring (18) Vertiefungen (Taschen) (33a) aufweist, welche mit einem 15 elektrisch leitfähigen Werkstoff, bevorzugt Aluminium gefüllt sind.

7. Rotations-Induktions-Wärmeerzeuger nach Anspruch 5, **dadurch gekennzeichnet, dass** der Induktionsring Vertiefungen aufweist, welche mit einem elektrischen, nicht leitfähigen Werkstoff (Isolator) gefüllt sind.

8. Rotations-Induktions-Wärmerzeuger nach einem der vorherigen Ansprüche, **dadurch gekennzeichnet, dass** der Magnetring (20) einen Kurzschlussring (44) aufweist und dieser Kurzschlussring (44) bevorzugt aus einem Werkstoff mit höherwertiger elektrischer Leitfähigkeit und/oder mit höherwertiger magnetischer Permeabilität als der Magnetring (20) besteht.

9. Rotations-Induktions-Wärmeerzeuger mit Gleichstromerregung nach einem der vorhergehenden Ansprüche **dadurch gekennzeichnet, dass** die Transformation des magnetischen Gleichfeldes in ein magnetisches Wechselfeld in Kaskaden erfolgt, wobei die geometrische Form, die magnetische Permeabilität (ì B/H) und die elektrische Leitfähigkeit (σ S/m) im deren Zusammenhang stehender Bauteile, die magnetische Flussdichte (B Tesla) vom Magnetring (20) zum Polrad (19) vorzugsweise um 0,7 Tesla und vom Polrad (19) zum Induktionsring (18) vorzugsweise um 0,7 Tesla reduziert, wobei
dass aus der kaskadenförmigen Reduzierung des magnetischen Feldes bzw. magnetischen Potentials hohe parasitäre Magnetfelder im Luftspalt, bedingt durch ein Wechselfeld, das sich aus der Drehung des Polrades (19), zwischen Magnetring (20) und Polrad (19) entstehen und sich im Luftspalt zwischen Polrad (19) und Induktionsring (18) wesentlich verringern, hohe Wirbelströme im Magnetring (20) bilden, sich im Polrad (19) reduzieren und sich eine weitere Reduktion im Induktionsring ergibt.

10. Rotations-Induktions-Wärmeerzeuger nach einem der vorhergehenden Ansprüche, 10 **dadurch gekennzeichnet, dass** zur Transformation des magnetischen Gleichfeldes in ein magnetisches Wechselfeld mittels mechanischen Bauteil kinetische Energie erforderlich ist und sich die kinetische Gesamtenergie in Antriebsenergie und Bremsenergie aufteilt, wobei vorzugsweise die kinetische Gesamtenergie in elektrische Energie in Form von Wirbelströmen umgewandelt wird und vorzugsweise elektrische Energie 15 in Wirbelströmen vollständig oder soweit wie möglich in Wärme umgewandelt wird.

11. Rotations-Induktions-Wärmeerzeuger nach einem der vorhergehenden Ansprüche **dadurch gekennzeichnet, dass** die Wärme primär im Bauteil Induktionsring (18) und sekundär im Bauteil Polrad (19) entsteht.

12. Rotations-Induktions-Wärmeerzeuger nach einem der vorhergehenden Ansprüche **dadurch gekennzeichnet, dass** die Wärme vom Induktionsring (18) und Polrad (19) in flüssige oder gasförmige Stoffe transferiert wird.

13. Rotations-Induktions-Wärmeerzeuger nach einem der vorherigen Ansprüche **dadurch gekennzeichnet, dass** die kinetische Differenzenergie zum Aufrechterhalten der Rotation des Polrades (19) mittels eines externen Antrieb (14), bevorzugt ein Elektromotor, aufgebracht wird.

14. Rotations-Induktions-Wärmeerzeuger nach einem der vorhergehenden Ansprüche **dadurch gekennzeichnet, dass** Hochtemperaturöl als Wärmeträgermedium bevorzugt eingesetzt ist und vorzugsweise die Erwärmung, bis auf 250°C ohne Dampfbildung möglich ist.

15. Rotations-Induktions-Wärmeerzeuger nach vorherigen Ansprüchen **dadurch gekennzeichnet, dass** eine Warm- Kaltwassermischeinrichtung mit den Umwälzpumpen und die Warm- Kaltwasser- Mischvorrichtung aus Wärmeabstrahlungsgründen in das Heizsystem integriert ist und/oder die thermische Abgabeleistung bei mehr als 10 kW, 5 vorzugsweise mehr als 20 oder 50 kW, oder besonders bevorzugt bei mehr als 100 bis 500 kW liegt.
